# EUROPÄISCHE PATENTSCHRIFT

(11) **EP 0 423 848 B1**
(45) Veröffentlichungstag und Bekanntmachung des Hinweises auf die Patenterteilung: **14.09.1994**
(21) Anmeldenummer: 90125185.0
(22) Anmeldetag: 22.05.1987
(51) Int. Cl.: H01H 13/02, H02B 1/04

(54) **Melde- und gegebenenfalls Befehlsgerät für den Frontplatteneinbau**
Signal and/or control device for panel front mounting
Dispositif de signalisation et le cas échéant de commande pour le montage sur un panneau frontal

(30) Priorität: 30.06.1986 DE 3621901
(43) Veröffentlichungstag der Anmeldung: 24.04.1991
(62) Teilanmeldung aus: 87107447.2
(73) Patentinhaber: Elan Schaltelemente GmbH, D-35435 Wettenberg (DE)
(72) Erfinder: Willems, Jürgen, W-4000 Düsseldorf-Eller (DE); Beyer, Detlev, W-4040 Neuss 26 (DE); Schöning, Ewald, W-4010 Hilden (DE)
(74) Vertreter: Sparing Röhl Henseler Patentanwälte

(56) Entgegenhaltungen:
- DE-A- 2 126 125
- DE-B- 1 199 849
- DE-B- 2 405 893

## Beschreibung

Die Erfindung betrifft ein Melde-una gegebenenfalls Befehlsgerät für den Frontplatteneinbau nach dem Oberbegriff des Anspruchs 1.

Bei Meldegeräten für den Frontplatteneinbau, die eine Lampe aufweisen, stellt der Lampenwechsel einen immer wiederkehrenden Arbeitsgang im Rahmen der Servicearbeiten dar, wobei es üblich ist, daß der Lampenwechsel von der Frontseite her erfolgt, etwa indem eine Kalotte, die die Lampe abdeckt, abgeschraubt und dann die Lampe aus der feststehenden Lampenfassung heraus mit einem speziellen Werkzeug, einem "Lampenzieher", gewechselt wird.

Aus der DE-B-2 405 893 ist ein Gerät der eingangs genannten Art bekannt, dessen Gehäuse aus zwei ineinander verschraubten zylindrischen Teilen besteht, von denen eines eine Anschlagschulter bildet und das andere mit Außengewinde für eine Überwurfmutter versehen ist, wodurch die Befestigung in einer Öffnung einer Platte erfolgen kann. Das Gehäuse nimmt einen hülsenförmigen Schaltknopf auf, der zwischen einer ein Schaltelement betätigenden und einer das Schaltelement nicht betätigenden Stellung axial beweglich ist, in der letzteren Stellung aus dem Gehäuse herausragt und in dem herausragenden Teil eine Lampe trägt. Der Schaltknopf ist nicht einfach herausnehmbar, vielmehr muß hierzu das Gerät auseinander gebaut werden, um an den Schaltknopf zu gelangen und damit die Lampe wechseln zu können.

Aufgabe der Erfindung ist es, ein Melde-und gegebenenfalls Befehlsgerät der eingangs genannten Art zu schaffen, bei dem der Lampenwechsel von vorne ohne Werkzeug möglich ist.

Diese Aufgabe wird entsprechend dem kennzeichnenden Teil des Anspruchs 1 gelöst.

Wenn die Kalotte, die die Lampe abdeckt, gelöst wird, "springt" die gesamte Fassung mit der Lampe dem Monteur entgegen und läßt sich aus dem Gerät herausnehmen. Der Lampenwechsel erfolgt dann von Hand, und die gesamte Fassung wird wieder in das Gerät gesteckt und mit der Kalotte festgehalten.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt im Schnitt eine erste Ausführungsform eines Melde-und Befehlsgerätes im Frontplatteneinbau.

Fig. 2 zeigt eine zweite Ausführungsform im Schnitt.

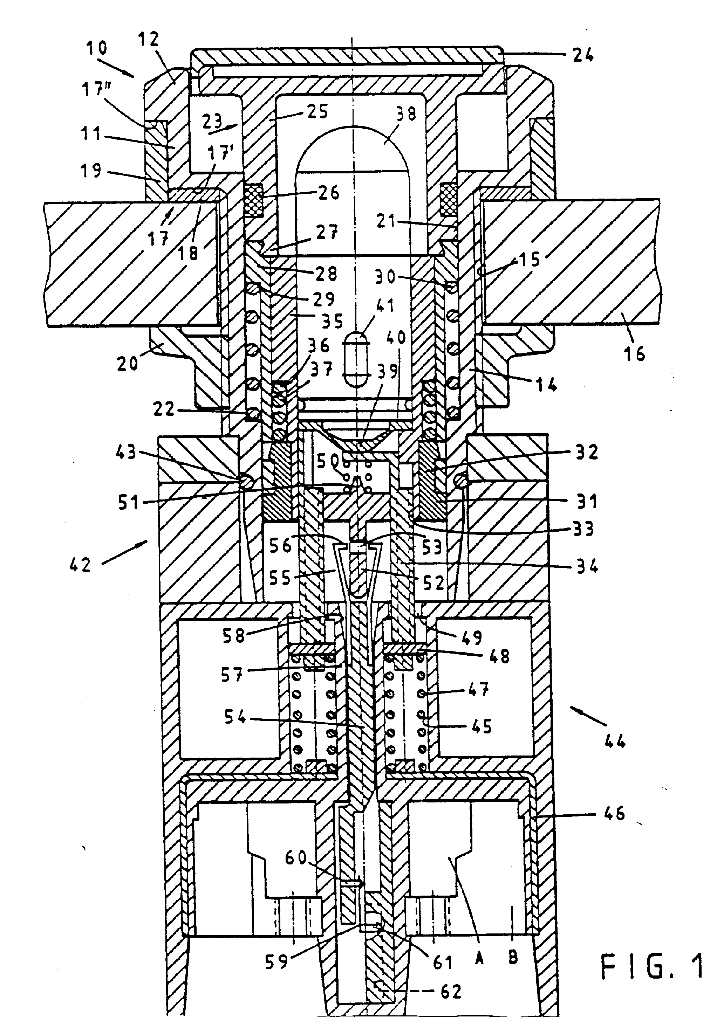

Das in Fig. 1 dargestellte Melde-und Befehlsgerät umfaßt ein Kopfteil 10 mit einer Hülse 11, die einen frontseitigen Kragen 12 und einen mit Außengewinde versehenen Abschnitt 14 mit vermindertem Durchmesser aufweist, der von einer Bohrung 15 einer Frontplatte 16 aufgenommen wird. Die Hülse 11 besitzt eine gestufte Schulter 17 zwischen dem Kragen 12 und der Abschnitt 14 mit einem inneren umlaufenden Abschnitt 17′, der sich über eine Frontplattendichtung 18 auf der Frontplatte 16 abstützt, und einem äußeren umlaufenden Abschnitt 17˝, der sich über einen Frontring 19 frontseitig auf der Frontplatte 16 abstützt, wobei der Frontring 19 die Frontplattendichtung 18 nach außen abdeckt und bündig zu dem Kragen 12 angeordnet ist. Die Hülse 11 wird rückseitig von der Frontplatte 16 durch eine Kontermutter 20 gesichert.

Das Kopfteil 10 ermöglicht auch eine gegenüber der dargestellten vorstehenden Frontplatteneinbauweise versenkte Frontplatteneinbauweise, indem eine Bohrung 15 mit einem Durchmesser oder Quadrat entsprechend dem Außendurchmesser oder Außenquadrat des Abschnitts 17′ zusammen mit einem Druckring zwischen Kontermutter 20 und Frontplatte 16, jedoch ohne Frontring 19 und Frontplattendichtung 18 verwendet wird.

Die Bohrung 21 der Hülse 11 besitzt eine Schulter 22 benachbart zum rückwärtigen Ende und nimmt eine als Drucktaste wirkende Kalotte 23 auf, die mit einem Deckel 24 versehen ist, der auf die Kalotte 23 aufgerastet ist. Die Kalotte 23 und der Deckel 24 bestehen aus gegebenenfalls farbigem, transparentem Kunststoffmaterial. Die Kalotte 23 besitzt einen rohrförmigen Abschnitt 25, der längsverschieblich in der Bohrung 21 geführt ist. Der Abschnitt 25 besitzt eine umlaufende Nut zur Aufnahme einer Schleifdichtung 26.

Die Kalotte 23 ist über entsprechende Rastnasen 27 mit einer Innenhülse 28 lösbar verbunden, die eine Schulter 29 gegenüber von der Schulter 22 aufweist. Zwischen den beiden umlaufenden Schultern 22, 29 befindet sich eine Druckfeder 30. Eine Abstützplatte 31 ist über entsprechende Arme 32 mit dem rückwärtigen Ende der Innenhülse 28 verrastet und trägt Durchbrüche 33 für Übertragungs-Kontaktteile 34. Eine hülsenförmige Lampenfassung 35 wird von der Innenhülse 28 aufgenommen und besitzt eine zur Abstützplatte 31 gerichtete Schulter 36, wobei zwischen der Schulter 36 und den Armen 32 der Abstützplatte 31 eine Druckfeder 37 angeordnet ist. Der Innendurchmesser der Innenhülse 28 ist größer als der Innendurchmesser des rohrförmigen Abschnittes 25 der Kalotte 23, während der Außendurchmesser der Lampenfassung 35 praktisch gleich dem Innendurchmesser der Innenhülse 28 ist, so daß die Lampenfassung 35 durch die Druckfeder 37, die sich an den Armen 32 abstützt, gegen die Rückseite der Kalotte 23 gedrückt und von letzterer in der Hülse 11 gehalten wird.

Die Lampenfassung 35 nimmt eine Lampe 38 mit einem mittleren Fußkontakt 39 und einem äußeren ringförmigen Fußkontakt 40 auf. Ferner besitzt die Lampe 38 einen an ihrer Seitenwand vorgesehenen Vorsprung 41, der in der Lampenfassung 35 in einer hierfür vorgesehenen im wesentlichen L-förmigen Ausnehmung (nicht dargestellt) abgestützt wird, so daß die Lampe 38 mit ihrem vorderen Teil aus der Lampenfassung 35 herausragend - wie dargestellt - gehalten wird.

Mit dem rückwärtigen Ende der Hülse 11 ist über einen zweiteiligen Halter 42, der mit Hilfe von Federdrähten 43 an der Hülse 11 lösbar befestigt ist, ein Gehäuse 44 gehalten, das zwei sich in Axialrichtung der Hülse 11 erstreckenae zylindrische Führungen 45 aufweist, in denen rückseitig Kontaktfahnen 46 münden, die mit Schraubanschlußklemmen A verschweißt sind, und die Schraubanschlußklemmen A Drahtanschlußöffnungen B aufweisen, die dem Anwender als elektrischer Anschluß dienen, an denen sich Druckfeaern 47 elektrisch kontaktierend abstützen, die frontseitig ein Abstützteil 48 tragen, an dem sich die Übertragungs-Kontaktteile 34 rückseitig abstützen, so daß eine Stormversorgung der Kontakte 39, 40 der Lampe 38 gewährleistet ist. Die Führungen 45 besitzen frontseitig verengte Austrittsöffnungen 49 für die Übertragungs-Kontaktteile 34, so daß die Abstützteiie 48 nicht unter der Einwirkung der Federn 47 austreten können.

Der den Fußkontakt 39 kontaktierende Übertragungskontaktteil 34 kann zusätzlich durch eine Druckfeder 50, die durch einen Vorsprung 51 an der Abstützplatte 31 zentriert wird, gegen den Fußkontakt 39 gedrückt werden, um eine sicherere Kontaktierung zu gewährleisten. Die Abstützplatte 31 besitzt ferner einen rückwärts gerichteten axialen Fortsatz 52 mit einer Durchtrittsöffnung 53. Ein axialer Stößel 54, der sich unmittelbar an den Fortsatz 52 anschließt, trägt vorderseitig zwei Federn 55 mit hakenförmigen nach innen gerichteten freien Enden 56. Die freie Länge der Federn 55 in Axialrichtung entspricht im wesentlichen dem Abstand der Öffnung 53 vom hinteren Ende des Fortsatzes 52. Der Stößel 54 ist in einer Axialführung 57 angeordnet, die eine trichterförmige Erweiterung 58 benachbart zum vorderen Ende des Stößels 54 aufweist. Das rückwärtige Ende des Stößels 54 ist abgekröpft und trägt drehbar gelagert einen Rasthebel 59, der über seinen Niet 60 mit dem abgekröpften Ende des Stößels 54 verbunden ist. Der Rasthebel 59 besitzt einen zweiten Niet 61, der in eine herzförmige Schaltkurve 62 eingreift.

Der Lampenwechsel erfolgt in der Weise, daß der Deckel 24 von der Kalotte 23 entfernt und danach die Kalotte 23 von der Innenhülse 28 abgeklippt wird. Die Druckfeder 37 drückt dann die Lampenfassung 35 in Richtung zur Frontseite aus der Innenhülse 28 heraus, so daß sie sich ohne weiteres aus dem Gerät herausnehmen läßt. Die Auswerfbewegung der Lampenfassung 35 wird zusätzlich unterstützt durch die Druckfedern 47 und 50, die auf die Übertragungs-Kontaktteile 34 in Auswurfrichtung einwirken.

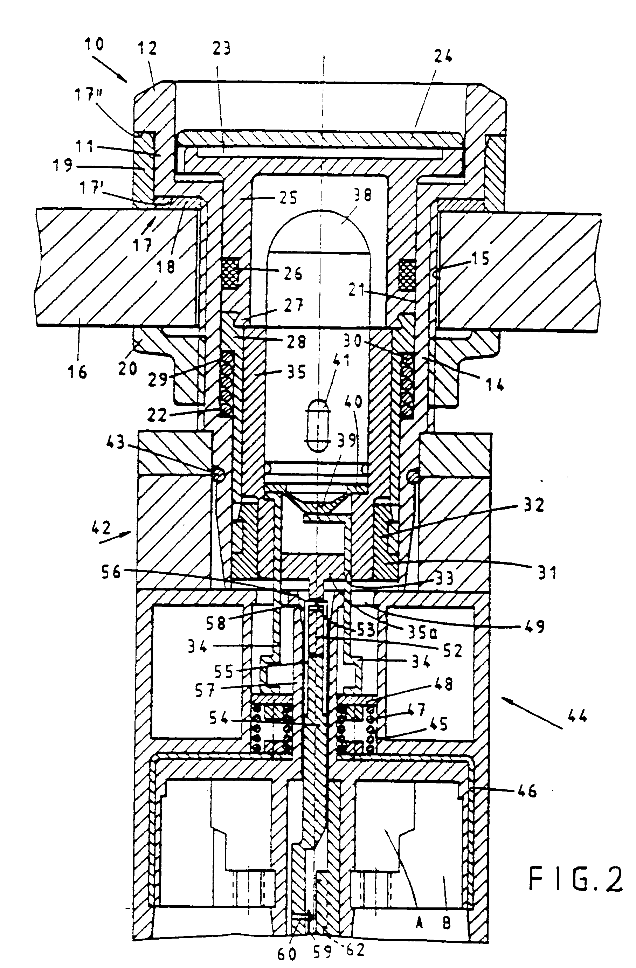

Zur Betätigung eines Druckschalters wird die Kalotte 23 bezüglich der Hülse 11 einwärts gedrückt (vergleiche auch Fig. 2), wobei der zweite Niet 61 des Rasthebels 59 aus der vorderen Haltepositionder Schaltkurve 62 in eine hintere Rastposition in dieser Schaltkurve 62 bewegt wird. Außerdem wird durch das Eindrücken der Kalotte 23 der Fortsatz 52 in die Axialführung 57 geschoben, so daß die Federn 55 durch die Axialführung 57 und deren Erweiterung 58 in zwangsgeführten Eingriff mit der Öffnung 53 gelangen und auf diese Weise die Kalotte 23 mit den damit in Eingriff stehenden Teilen in der eingedrückten Stellung zurückhalten. Durch erneutes Drücken der Kalotte 23 gelangt der zweite Niet 61 aus der Raststellung der Schaltkurve 62, so daß die Druckfeder 30 die Kalotte 23 und die damit verbundenen Teile in die in Fig. 1 dargestellte Aus gangsposition zurückdrückt. Über den Stößel 54 kann aber auch anstelle eines Druckschalters ein Tastelement betätigt werden, wobei dann der Fortsatz 52 mit dem Stößel 54 einstückig ist und die Federn 55 entfallen.

Bei der in Fig. 2 dargestellten Ausführungsform ist das Abstützteil 31 als Ring ausgebildet, das die Lampenfassung 35 aufnimmt, die einen Boden 35a besitzt, der den Fortsatz 52 mit der Öffnung 53 trägt. Die Übertragungs-Kontaktteile 34 sind durch den Boden 35a der Lampenfassung 35 geführt und zur Frontseite hin mittels der Druckfedern 47 vorgespannt. Die Druckfeder 37 ist hierbei entfallen. Im nichteingedrückten Zustand der Kalotte 23 wird zum Wechseln der Lampe 38 der Deckel 24 und die Kalotte 23 entfernt, woraufhin die Lampenfassung 35 einschließlich der Lampe 38 und der Übertragungs-Kontaktteile 34 aufgrund der Einwirkung der Druckfedern 47 aus der Innenhülse 28 ausgeworfen wird, so daß sie zum Wechseln der Lampe 38 ergriffen und gänzlich herausgezogen werden kann.

Neben dem Vorteil des einfachen Lampenwechsels hat man auch den Vorteil, daß die Lampe 38 mitläuft, d.h. immer an der gleichen Stelle steht, ob die Kalotte 23 gedrückt oder nicht gedrückt ist, und somit immer eine gleichmäßige Ausleuchtung der Kalotte 23 gewährleistet. Dies ist auch dann der Fall, wenn über die Kalotte 23 ein Rastschalter oder dergleichen betätigt wird, wie vorstehend beschrieben ist.

## Patentansprüche

1. Melde- und gegebenenfalls Befehlsgerät für den Frontplatteneinbau mit einem Kopfteil (10) mit einer in einer Bohrung (15) der Frontplatte (16) einsteckbaren und an der Frontplatte (16) sicherbaren Hülse (11), in der eine Lampenfassung (35) zur Aufnahme von Übertragungs-Kontaktteilen (34) für eine Lampe (38) gleitbeweglich angeordnet und die frontseitig durch eine abnehmbare, als Drucktaste wirkende Kalotte (23) verschlossen ist, wobei die Lampenfassung (35) längsverschiebbar in der Hülse (11) geführt und durch die Kalotte (23), gegen die die Lampenfassung (35) federvorgespannt ist, in der Hülse (11) gehalten ist, wobei die Kalotte (23) durch eine eine Schaltkurve aufweisende Rasteinrichtung in ihrer gedrückten Stellung verrastbar ist und die Lampenfassung (35) bodenseitig einen Fortsatz (52) aufweist, dem ein zu diesem Fortsatz (52) gerichteter Stößel (54) zugeordnet ist, dadurch **gekennzeichnet**, daß der Fortsatz (52) eine Ausnehmung (53) aufweist und der Stößel (54) an der Rasteinrichtung (59 bis 62) befestigt ist, wobei der Stößel (54) an dem dem Fortsatz (52) benachbarten Ende mindestens eine Feder (55) trägt, die mit einem hakenartigen Ende (56) in die Ausnehmung (53) einhakbar ist, und eine Zwangsführung (57) für die Feder (55) zum Einhaken bei gedrückter Kalotte (23) vorgesehen ist.

2. Gerät nach Anspruch 1, dadurch gekennzeichnet, daß der Stößel (54) über die Schaltkurve (62) zwischen zwei in axialer Richtung mit Abstand zueinander angeordneten Endstellungen verschiebbar ist.

3. Gerät nach Anspruch 1 oder 2, dadurch gekennzeichnet, daß der Stößel (54) axial mittig zum Kopfteil (10) angeordnet und mit einem abgekröpften hinteren Ende an der Rasteinrichtung (59 bis 62) befestigt ist.

4. Gerät nach einem der Ansprüche 1 bis 3, dadurch gekennzeichnet, daß die Rasteinrichtung (59 bis 62) einen an dem Stößel (54) befestigbaren Rasthebel (59) aufweist, der mit der Schaltkurve (62) in Eingriff steht.

5. Gerät nach einem der Ansprüche 1 bis 4, dadurch gekennzeichnet, daß die Schaltkurve (62) im wesentlichen herzförmig ist.

## Claims

1. Signalling and control device for panel front mounting, with a head portion (10) having a casing (11) which is insertable into a boring (15) on a front panel (16) and which can be secured to the front panel (16) and in which a lamp socket (35) accommodating transmission contact parts (34) for a lamp (38) is slidably installed and which is closed at the front by a removable cap (23) acting as a push button, the lamp socket (35) being longitudinally movable in the casing (11) and held in the casing (11) by the cap (23) against which the lamp socket (35) is spring-biased, while the cap (23) can be caused to lock into a depressed position by a detent device having a control cam, the lamp socket (35) having a base extension (52) with which is associated a plunger (54) directed towards the said extension (52), characterised by the fact that the extension (52) has a recess (53) and the plunger (54) is affixed to the detent device (59 to 62), the plunger (54) being provided, at the end adjacent to the extension (52), with at least one spring (55) which can engage the recess (53) by means of a hooked end (56), an automatic guide (57) for the spring (55) being provided, to ensure that the latter will be hooked in when the cap (23) is pushed.

2. Device in accordance with Claim 1, characterised by the fact that the plunger (54) can be moved by the control cam (62) between two end positions spaced from each other in the axial direction.

3. Device in accordance with Claim 1 or 2, characterised by the fact that the plunger (54) is axially central with respect to the head part (10) and is secured to the detent device (59 to 62) by a rear end bent at a right angle.

4. Device in accordance with any one of Claims 1 to 3, characterised by the fact that the detent device (59 to 62) has a catch lever (59) which can be secured to the plunger (54) and which is engaged with the control cam (62).

5. Device in accordance with any one of Claims 1 to 4, characterised by the fact that the control cam (62) is generally heart-shaped.

## Revendications

1. Dispositif de signalisation et le cas échéant de commande pour le montage sur un panneau frontal, comportant une tête (10) avec un manchon (11), enfichable dans un trou (15) du panneau frontal (16) et visible sur ce panneau (16), dans lequel une douille de lampe (35) est disposée mobile à glissement pour recevoir les pièces de transmission de contact (34) d'une lampe (38) et qui est fermé frontalement par une calotte (23) amovible servant de bouton poussoir, la douille de lampe (35) étant mobile longitudinalement dans le manchon (11) et maintenue dans le manchon (11) par la calotte (23), contre laquelle la douille de lampe (35) est pressée par un ressort, la calotte (23) étant encliquetée dans sa position enfoncée par un dispositif d'encliquetage présentant une came d'enclenchement et la douille de lampe (35) présentant du côté du fond un appendice (52) auquel est associé un poussoir guidé (54), caractérisé en ce que l'appendice (42) présente un évidement (53) et que le poussoir (54) est fixé sur le dispositif d'encliquetage (59 à 62), le poussoir (54) portant, à l'extrémité voisine de l'appendice (52), au moins un ressort (55) qui peut s'accrocher dans l'évidement (53) par une extrémité en forme de crochet (56), un guidage forcé (7) étant prévu pour le ressort (55) pour qu'il s'accroche lorsque la calotte (23) est enfoncée.

2. Dispositif selon la revendication 1 caractérisé en ce que le poussoir (54) est déplaçable sur la came d'enclenchement entre deux positions extrêmes espacées entre elles axialement.

3. Dispositif selon la revendication 1 ou 2 caractérisé en ce que le poussoir (54) est disposé sur l'axe central de la tête (10) et fixé sur le dispositif d'encliquetage par une extrémité arrière de forme sinueuse.

4. Appareil selon l'une des revendications 1 à 3 caractérisé en ce que le dispositif d'encliquetage (59 à 62) présente un levier d'encliquetage (59) pouvant être fixé sur le poussoir (54) et qui est en prise avec la came d'enclenchement.

5. Appareil selon l'une des revendications 1 à 4 caractérisé en ce que la came d'enclenchement a une forme approximativement cardioïde.
